# EUROPÄISCHE PATENTANMELDUNG

(11) **EP 1 993 176 A1**
(43) Veröffentlichungstag der Anmeldung: **19.11.2008**
(21) Anmeldenummer: 08103966.1
(22) Anmeldetag: 15.05.2008
(51) Int. Cl.: H02B 1/18

(54) **Lasttrennschalter in Leistenbauform mit Sicherungen**

(30) Priorität: 16.05.2007 DE 102007023466
(71) Anmelder: SIEMENS AKTIENGESELLSCHAFT, 80333 München (DE)
(72) Erfinder: Rohr, Claus, 44797 Bochum (DE); Scudlo, Steffen, 91056 Erlangen (DE)

(57) **Zusammenfassung**

Die Erfindung stellt einen Lasttrennschalter (28) in Leistenbauform mit Sicherungen vor, der mehrpolig schaltbar ist und zu jedem Pol einen ersten und einen zweiten Anschluss aufweist, und der modular aufgebaut ist: Zu jedem Pol umfasst er ein einpoliges Schaltmodul (10). Ein solches einpoliges Schaltmodul (10) ist aus herkömmlichen Lasttrennschaltern (14) bekannt und muss somit nicht für den Lasttrennschalter (28) in Leistenbauform eigens konstruiert werden.

## Beschreibung

Die Erfindung betrifft einen Lasttrennschalter in Leistenbauform mit Sicherungen, der mehrpolig schaltbar ist und zu jedem Pol einen Zugangs- und einen Abgangsanschluss aufweist.

Während herkömmliche Lasttrennschalter im Einbauzustand jeweils oben und unten einen Anschluss für Zugang bzw. Abgang haben, sind Lasttrennschalter in Leistenbauform für den Fall gedacht, dass ein Anschluss an parallel verlaufende Schienen, denen jeder eine Phase des Stroms (Pol) zugeordnet ist, ermöglicht werden soll. Lasttrennschalter in Leistenbauform sind somit breiter als herkömmliche Lasttrennschalter, aber bauen nicht so hoch. Herkömmliche Lasttrennschalter sind häufig modular aufgebaut, aus einpoligen Schaltmodulen.

Die DE 101 196 11 A1 offenbart einen Sicherungslasttrennschalter in Leistenbauform, bei dem eine ausgeklügelte Kontaktierung vorgesehen ist.

Kennzeichen bekannter Lasttrennschalter in Leistenbauform mit Sicherungen ist, dass die Schaltung gekoppelt für sämtliche Pole erfolgt und zwar über eine einzige, alle Pole betreffende Schaltwelle.

Die Verwendung eines einzigen Schaltschlosses ist bei einem Leistungsschalter, der als Einschubkassette im Sicherungsleistenformat ausgebildet ist, in der DE 198 527 13 C1 beschrieben.

Die bisher bekannten Lasttrennschalter in Leistenbauform mit Sicherungen sind jeweils besondere Konstruktionen, deren Entwicklung aufwendig ist. Ein einmal konstruierter Lasttrennschalter in Leistenbauform muss zudem einem Zulassungsverfahren unterzogen werden, zu dem eine Prüfung gehört. Dieses Zulassungsverfahren ist aufwendig.

Es ist Aufgabe der Erfindung, einen Lasttrennschalter der eingangs genannten Art bereitzustellen, der leicht und unaufwendig konstruiert ist und möglichst schnell auf dem Markt zur Verfügung stehen kann.

Diese Aufgabe wird dadurch gelöst, dass der Lasttrennschalter zu jedem Pol ein einpoliges Schaltmodul umfasst. Der Lasttrennschalter ist somit modular aufgebaut.

Die Verwendung einer modularen Bauweise auch bei einem Lasttrennschalter in Leistenbauform ermöglicht die Verwendung von bereits vorkonstruierten einpoligen Schaltmodulen, die auch bereits ein Zulassungsverfahren durchlaufen haben. Dadurch muss der Lasttrennschalter in Leistenbauform, bei dem die einpoligen Schaltmodule verwendet werden, nicht seinerseits aufwendig entwickelt werden. Zudem erhält man den Vorteil, dass ein solches einpoliges Schaltmodul verwendet werden kann, das auch bei Lasttrennschaltern in herkömmlicher Bauweise verwendet wird, so dass das einpolige Schaltmodul bekannter Konstruktionen in höheren Stückzahlen, nämlich für die herkömmliche Bauweise einerseits und die für die Leistenbauform andererseits, hergestellt werden kann, und dass entsprechende Werkzeuge bei der Produktion verwendet werden können, die bereits existieren.

Ein herkömmliches einpoliges Schaltmodul umfasst ein Sicherungselement und eine Schaltkammer, wobei die Schaltkammer zwei Anschlüsse aufweist. Zur Verwendung des einpoligen Schaltmoduls in dem Lasttrennschalter in Leistenbauform wird ein erster Anschluss der Schaltkammer mit einem der Zugangs-Abgangsanschlüsse und ein zweiter Anschluss der Schaltkammer mit einem der anderen Zugangs-Abgangsanschlüsse verbunden. Während bei der herkömmlichen Verwendung des Schaltmoduls der erste Anschluss der Schaltkammer oben und der zweite Anschluss der Schaltkammer unten befindlich ist, zum Anschließen von Leitungen von oben und unten her, sind bei dem Lasttrennschalter in Leistenbauform die Außenanschlüsse Abgangsanschluss und Zugangsanschluss, und diese können wie bei Lasttrennschaltern in Leistenbau üblich hinten und seitlich, bezogen auf den herkömmlichen Einbauzustand, liegen. Das Schaltmodul kann innerhalb des Lasttrennschalters anders orientiert sein, als es dies üblicherweise ist.

Die herkömmlichen einpoligen Schaltmodule umfassen einen Durchlass in der Schaltkammer für eine Schaltwelle. Bei Lasttrennschaltern herkömmlicher Art und Weise fluchten die Durchlässe verschiedener Schaltmodule, so dass eine einzige Schaltwelle oder ein Koppelstück hindurchgesteckt werden kann, die sämtliche Schaltkammern und ein Schaltschloss miteinander koppelt. Vorliegend können die Schaltmodule nicht mehr so angeordnet werden, dass die einzelnen Durchlässe der Schaltkammer miteinander fluchten. Es wird stattdessen in den Durchlass jedes Schaltmoduls eine Schaltwelle oder ein Koppelstück gesteckt, und es wird ein separater Koppelmechanismus vorgesehen, damit die Schaltwellen miteinander gekoppelt sind. Dadurch wird gewährleistet, dass die einzelnen einpoligen Schaltmodule miteinander gekoppelt schalten, auch ohne dass eine einzige koppelnde Schaltwelle verwendet wird.

Andere Arten herkömmlicher einpoliger Schaltmodule umfassen einen herausstehenden Eingreifmechanismus und eine Aussparung für den Eingreifmechanismus. Üblicherweise ist der Eingreifmechanismus verzahnt, und die Aussparung weist ebenfalls eine Verzahnung auf. Der Eingreifmechanismus des einen Schaltmoduls greift in die Aussparung des anderen Schaltmoduls üblicherweise ein. Bei der Verwendung derartiger einpoliger Schaltmodule in einem Lasttrennschalter in Leistenbauform stehen die Eingreifmechanismen parallel hervor. Über einen geeigneten Koppelmechanismus, der idealerweise an die Verzahnung angepasst ist, können auch diese miteinander gekoppelt werden.

Bei einer bevorzugten Ausführungsform liegen die einpoligen Schaltmodule gerade um 90° gekippt relativ gesehen zu Ihrer Stellung in einem herkömmlichen Lasttrennschalter. Die Schaltmodule liegen jedoch in einer Ebene. Dadurch wird der vorteilhafte Zustand erzielt, dass die Schaltmodule in dem Lasttrennschalter derart angeordnet sind, dass die Schaltwellen parallel hervorstehen. Vorzugsweise kann dies so geschehen, dass die Schaltwellen in einer Reihe angeordnet sind. Durch diese Maßnahme bzw. Maßnahmen kann der Koppelmechanismus konstruktiv besonders einfach ausgebildet werden.

Wie bereits erwähnt, dient ein Lasttrennschalter in Leistenbauform zum Feststecken des Lasttrennschalters an parallel verlaufenden (Kupfer-) Schienen. Um dies zu ermöglichen, sollten die Anschlüsse einer Anschlussseite (Zugang oder Abgang) als Steckkontakte ausgebildet sein (beispielsweise ebenfalls aus Kupfer), die vorzugsweise nebeneinander angeordnet sind.

Nachfolgend wird eine bevorzugte Ausführungsform der Erfindung unter Bezug auf die Zeichnung beschrieben, in der
- FIG 1: in perspektivischer Darstellung einen modular aus einpoligen Schaltmodulen aufgebauten Lasttrennschalter herkömmlicher Art, also gemäß dem Stand der Technik, zeigt,
- FIG 2: das zur Verwendung bei dem Lasttrennschalter aus FIG 1 bekannte einpolige Schaltmodul gemäß dem Stand der Technik perspektivisch veranschaulicht,
- FIG 3: einen erfindungsgemäßen Lasttrennschalter in Leistenbauform mit Sicherungen perspektivisch veranschaulicht.

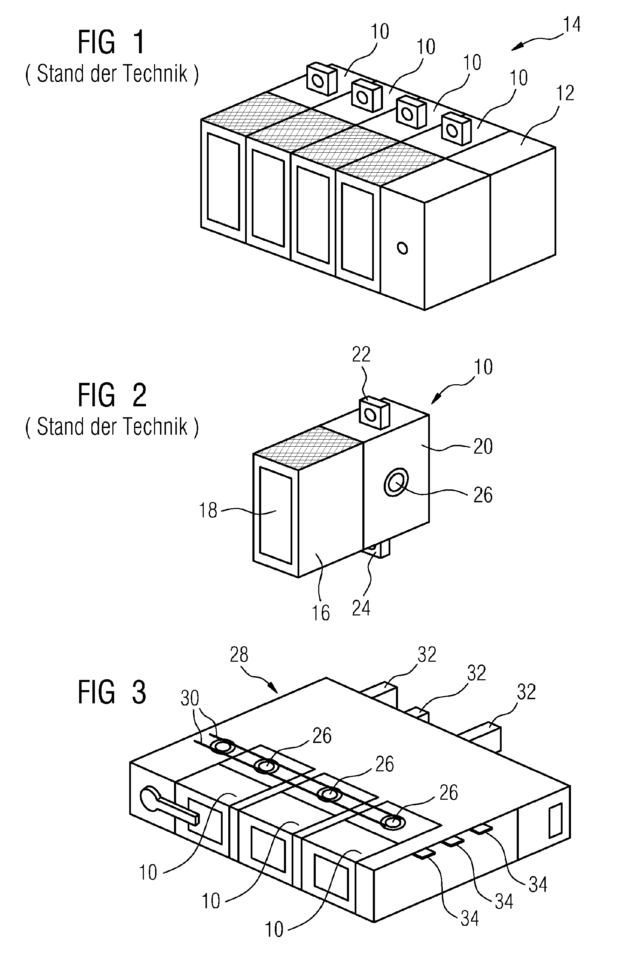

Lasttrennschalter herkömmlicher Bauweise sind modular aufgebaut, wobei einpolige Schaltmodule 10 zusammen mit einem Schaltschloss 12 einen in FIG 1 im Ganzen mit 14 bezeichneten Lasttrennschalter bilden. Jedes Schaltmodul 10 weist entsprechend der Darstellung in FIG 2 ein Sicherungselement 16 auf, das zur Aufnahme einer Sicherung dient, welche in FIG 2 nicht gezeigt ist, aber für eine Bedienperson über ein Fenster 18 zu sehen ist. Das einpolige Schaltmodul 10 weist ferner eine Schaltkammer 20 auf. Die Schaltkammer 20 hat einen ersten Anschluss 22 und einen zweiten Anschluss 24. Die Schaltkammer weist einen Durchlass 26 auf, der sich von der einen Seite des einpoligen Schaltmoduls 10 zur anderen erstreckt. Eine Schaltwelle ist durch diesen Durchlass 26 hindurchsteckbar. Die Durchlässe 26 der einzelnen einpoligen Schaltmodule 10 fluchten miteinander. Dadurch kann eine einzige Schaltwelle durch alle Durchlässe 26 der Schaltmodule 10 durchgeführt werden. Diese Schaltwelle wird in dem Schaltschloss 12 gesteuert.

Die aus dem herkömmlichen Lasttrennschalter 14 bekannten einpoligen Schaltmodule 10 werden in vorteilhafter Weise bei einem erfindungsgemäßen Lasttrennschalter 28 in Leistenbauform verwendet. FIG 3 zeigt den Lasttrennschalter 28 in Leistenbauform als dreipoligen Lasttrennschalter. Für jeden Pol ist ein einpoliges Schaltmodul 10 in dem Lasttrennschalter angeordnet. Die einpoligen Schaltmodule 10 sind nunmehr nicht mehr so angeordnet, dass ihre schmälere Seite horizontal steht, d. h. dass der Anschluss 22 nach oben zeigt und der Anschluss 24 nach unten zeigt. Vielmehr sind die einpoligen Schaltmodule 10 beim Lasttrennschalter 28 in Leistenbauform im Vergleich zu den einpoligen Schaltmodulen 10 aus dem Lasttrennschalter 14 um 90° gekippt. Die Durchlässe 26 fluchten somit nicht mehr miteinander. Vielmehr verlaufen die Durchlässe 26 der einzelnen einpoligen Schaltmodule 10 nunmehr genau parallel zueinander. In die Durchlässe 26 wird nun jeweils ein Koppelstück eingesteckt, und diese Koppelstücke werden über einen Koppelmechanismus 30 miteinander verkoppelt. FIG 3 zeigt als einfachste Ausführungsform des Koppelmechanismus zwei Stangen, die die Koppelstücke miteinander verbinden. Andere Formen von Koppelmechanismen, auch z. B. mit Hilfe von Riemen etc., sind denkbar.

Der Lasttrennschalter 28 ist wegen seiner Leistenbauform breiter als der herkömmliche Lasttrennschalter 14, aber weniger hoch als dieser. Der dreipolige Lasttrennschalter weist drei Anschlüsse 32 an einer Seite und drei Anschlüsse 34 an einer anderen Seite auf. Die Anschlüsse 32 sind im Einbauzustand hinten angeordnet, und die Anschlüsse 34 im Einbauzustand von vorne her zugänglich. Nicht gezeigt in FIG 3 ist die interne Anbindung der Anschlüsse 32 und 34. Jeweils einer der Anschlüsse 32 ist mit einem der Anschlüsse 22 eines der Schaltmodule 10 verbunden, und jeweils einer der Anschlüsse 34 ist mit einem der Anschlüsse 24 des Schaltmoduls 10 verbunden.

### Bezugszeichenliste

- 10: Schaltmodule
- 12: Schaltschloss
- 14: Lasttrennschalter
- 16: Sicherungselement
- 18: Fenster
- 20: Schaltkammer
- 22: erster Anschluss der Schaltkammer 20
- 24: zweiter Anschluss der Schaltkammer 20
- 26: Durchlässe der Schaltmodule 10
- 28: Lasttrennschalter in Leistenbauform
- 30: Koppelmechanismus
- 32: Anschlüsse an einer Seite des Lasttrennschalters 28
- 34: Anschlüsse an anderer Seite des Lasttrennschalters 28

## Patentansprüche

1. Lasttrennschalter (28) in Leistenbauform mit Sicherungen, der mehrpolig schaltbar ist und zu jedem Pol einen ersten Anschluss (34) und einen zweiten Anschluss (32) aufweist,
**dadurch gekennzeichnet, dass**
der Lasttrennschalter (28) zu jedem Pol ein einpoliges Schaltmodul (10) umfasst.

2. Lasttrennschalter (28) nach Anspruch 1,
**dadurch gekennzeichnet, dass**
jedes Schaltmodul (10) ein Sicherungselement (16) oder eine Trennlasche und eine Schaltkammer (20) umfasst, wobei jeweils ein erster Anschluss (22) der Schaltkammer mit einem der ersten Anschlüsse (34) und ein zweiter Anschluss (24) der Schaltkammer mit einem der zweiten Anschlüsse (32) verbunden ist.

3. Lasttrennschalter (28) nach Anspruch 2,
**dadurch gekennzeichnet, dass**
bei jedem Schaltmodul (10) in der Schaltkammer (20) ein Durchlass (26) für ein Koppelstück ausgebildet ist, dass in den Durchlass (26) jedes Schaltmoduls ein Koppelstück gesteckt ist, und wobei die Koppelstücke durch einen Koppelmechanismus (30) miteinander gekoppelt sind.

4. Lasttrennschalter (28) nach Anspruch 3,
**dadurch gekennzeichnet, dass**
die Schaltmodule (10) in dem Lasttrennschalter derart angeordnet sind, dass die Koppelstücke parallel hervorstehen und in einer Reihe angeordnet sind.

5. Lasttrennschalter nach einem der vorgehenden Ansprüche,
**dadurch gekennzeichnet, dass**
die zweiten Anschlüsse als Steckkontakte ausgebildet sind, die nebeneinander angeordnet sind und das Feststecken des Lasttrennschalters an parallel verlaufenden Schienen ermöglichen.
